# EUROPEAN PATENT APPLICATION

(11) **EP 2 923 806 A1**
(43) Date of publication of application: **30.09.2015**
(21) Application number: 15160510.2
(22) Date of filing: 24.03.2015
(51) Int. Cl.: B25J 9/16, G05B 19/42

(54) **ROBOT CONTROL DEVICE, ROBOT, ROBOTIC SYSTEM, TEACHING METHOD, AND PROGRAM**

(30) Priority: 26.03.2014 JP 2014063230
(71) Applicant: Seiko Epson Corporation, Tokyo 163 (JP)
(72) Inventor: Ouchi, Makoto, Nagano 392-8502 (JP)
(74) Representative: Hoffmann Eitle

(57) **Abstract**

A robot control device (3) includes a display section (320) adapted to display an image (RG) of a robot (2), a reception section (310) adapted to receive an operation to the image (RG) of the robot (2) displayed by the display section (320), and a teaching section (330) adapted to teach an action of the robot (2), the display section (320) displays an image showing one of movement of a gripping section (22) of the robot (2), rotation of the gripping section (22), and opening and closing of the gripping section (22) in accordance with the operation, and the teaching section (330) teaches one of the movement of the gripping section (22) of the robot (2), the rotation of the gripping section (22), and the opening and closing of the gripping section (22) to the robot (2) in accordance with the operation.

## Description

### BACKGROUND

### 1. Technical Field

The present invention relates to a robot control device, a robot, a robotic system, a teaching method, and a program.

### 2. Related Art

In JP-A-2012-171024 (Document 1), there is described a robot system, which displays a CG picture of a robot on a touch screen, then makes the CG picture of the robot virtually act on the touch screen, and then makes the robot act so as to follow the virtual action. Further, in Document 1, there is described, for example, an operation of changing the joint angle of an arm in the CG picture using a drag operation.

However, in Document 1, it is not possible to sufficiently teach actions actually required for a work of the robot. In the case of, for example, teaching an action of gripping an object with a hand, it is necessary to perform a variety of teachings such as a change of the angle of the arm, opening and closing of the hand, positioning of the hand to the object, and therefore, the operation is complicated. Further, it is difficult to teach change of the angle of the arm, opening and closing of the hand, positioning of the hand to the object, and so on in detail on the tough screen so that the object can actually be gripped with the hand.

### SUMMARY

It is the object of the present invention to easily perform teaching of a variety of types of actions of the robot.

A first aspect of the invention is directed to a robot control device including a display section adapted to display an image of a robot, a reception section adapted to receive an operation performed to the image of the robot displayed by the display section, and a teaching section adapted to teach an action of the robot, wherein the display section displays an image showing one of movement of a gripping section of the robot, rotation of the gripping section, and opening and closing of the gripping section in accordance with the operation, and the teaching section teaches one of the movement of the gripping section of the robot, the rotation of the gripping section, and the opening and closing of the gripping section to the robot in accordance with the operation. According to this configuration, since the images of the robot showing the actions corresponding to a variety of operations of the image are displayed, and at the same time, the teachings corresponding respectively to the actions are performed, the teachings of a wide variety of actions of the robot can more easily be performed.

The robot control device described above may be configured such that the reception section receives a movement of a contact position on a screen as the operation. According to this configuration, since in the present embodiment, the operation can be performed using the touch operation or the like on the screen on which the image is displayed, the teaching of the action of the robot can more intuitively be performed.

The robot control device described above may be configured such that in a case in which the reception section receives an operation of moving the contact position from an area on an image of the gripping section to an area on an image of an object, the display section displays an image showing an action of moving the gripping section to the object and then gripping the object, and the teaching section teaches the action of moving the gripping section to the object and then gripping the object to the robot. According to this configuration, when teaching the gripping action, it is possible to more easily teach the gripping action of the robot using a moving operation such as drag without inputting a detailed action of the robot.

The robot control device described above may be configured such that in a case in which the reception section receives an operation of selecting an image of an object in a state in which an image of the gripping section is selected, the display section displays an image showing an action of moving the gripping section to the object and then gripping the object, and the teaching section teaches the action of moving the gripping section to the object and then gripping the object to the robot. According to this configuration, when teaching the gripping action, it is possible to more easily teach the gripping action of the robot using a selection operation such as a tap operation without inputting the detailed action of the robot.

The robot control device described above may be configured such that the reception section receives the contact position on the image of the object as a gripping position, the display section displays an image showing an action of moving the gripping section to the gripping position and then gripping the object, and the teaching section teaches the action of moving the gripping section to the gripping position and then gripping the object to the robot. According to this configuration, it is possible to easily teach the gripping position while performing the moving operation such as drag or the selection operation such as a tap operation.

The robot control device described above may be configured such that the robot further includes an image acquisition section adapted to obtain a taken image obtained by taking an image of the object, and the display section generates the image of the object based on the taken image, and then displays the image of the object. According to this configuration, it is possible to easily teach the action to the actual object.

The robot control device described above may be configured such that in a case in which the reception section receives an operation of moving the contact position so as to draw a circular arc, the display section displays an image showing an action of rotating the gripping section, and the teaching section teaches the action of rotating the gripping section to the robot. According to this configuration, it is possible to easily teach the rotation action of the gripping section.

The robot control device described above may be configured such that the contact position includes a first contact position and a second contact position, and in a case in which the reception section receives an operation of moving the first contact position and the second contact position one of closer to each other and away from each other, the display section displays an image showing an action of one of closing and opening the gripping section, and the teaching section teaches the action of one of closing and opening the gripping section to the robot. According to this configuration, it is possible to easily teach the opening and closing action of the gripping section.

The robot control device described above may be configured such that in a case in which the reception section receives an operation of moving the contact position in a predetermined area on the screen, the display section changes a viewpoint, and then displays the image of the gripping section. According to this configuration, the change in the viewpoint can easily be performed.

The robot control device described above may be configured such that the reception section receives a movement of a pointing position shown in a pointing image on the screen operated by a pointing device as the operation instead of the movement of the contact position on the screen. According to this configuration, the teaching can easily be performed using a mouse or the like.

A second aspect of the invention is directed to a robot including a robot control device as described above.

A third aspect of the invention is directed to a robotic system including a robot and a robot control device adapted to control the robot, the robot control device being configured as described above According to this configuration, since the images of the robot showing the actions corresponding to a variety of operations of the image are displayed, and at the same time, the teachings corresponding respectively to the actions are performed, the teachings of a wide variety of actions of the robot can more easily be performed.

A fourth aspect of the invention is directed to a teaching method of an action of a robot including displaying an image of the robot, receiving an operation performed to the image of the robot displayed in the displaying, and teaching the action of the robot, wherein in the displaying, an image showing one of movement of a gripping section of the robot, rotation of the gripping section, and opening and closing of the gripping section is displayed in accordance with the operation, and in the teaching, one of the movement of the gripping section of the robot, the rotation of the gripping section, and the opening and closing of the gripping section is taught to the robot in accordance with the operation. According to this configuration, since the images of the robot showing the actions corresponding to a variety of operations of the image are displayed, and at the same time, the teachings corresponding respectively to the actions are performed, the teachings of a wide variety of actions of the robot can more easily be performed.

A fifth aspect of the invention is directed to a program of a robot control device including making the robot control device function as a display section adapted to display an image of a robot, a reception section adapted to receive an operation to the image of the robot displayed by the display section, and a teaching section adapted to teach an action of the robot, wherein the display section displays an image showing one of movement of a gripping section of the robot, rotation of the gripping section, and opening and closing of the gripping section in accordance with the operation, and the teaching section teaches one of the movement of the gripping section of the robot, the rotation of the gripping section, and the opening and closing of the gripping section to the robot in accordance with the operation. According to this configuration, since the images of the robot showing the actions corresponding to a variety of operations of the image are displayed, and at the same time, the teachings corresponding respectively to the actions are performed, the teachings of a wide variety of actions of the robot can more easily be performed.

### BRIEF DESCRIPTION OF THE DRAWINGS

The invention will be described with reference to the accompanying drawings, wherein like numbers reference like elements.
Fig. 1 is a diagram showing an example of a schematic configuration of a robotic system according to an embodiment of the invention.
Fig. 2 is a diagram showing an example of a functional configuration of the robotic system.
Fig. 3 is a diagram showing an example of a hardware configuration realizing a function of a robot control device.
Fig. 4 is a flowchart (part 1) showing an example of a teaching process of the embodiment.
Fig. 5 is a flowchart (part 2) showing the example of the teaching process of the embodiment.
Figs. 6A, 6B1, 6B2, and 6B3 are diagrams (part 1) showing an example of operations and display on a touch panel of the embodiment.
Figs. 7A, 7B1, 7B2, 7C1, 7C2, 7D1, and 7D2 are diagrams (part 2) showing the example of the operations and the display on the touch panel of the embodiment.
Figs. 8A, 8B1, 8B2, 8B3, 8C1, 8C2, and 8C3 are diagrams (part 3) showing the example of the operations and the display on the touch panel of the embodiment.

### DESCRIPTION OF AN EXEMPLARY EMBODIMENT

An embodiment of the invention will be explained with reference to the accompanying drawings.

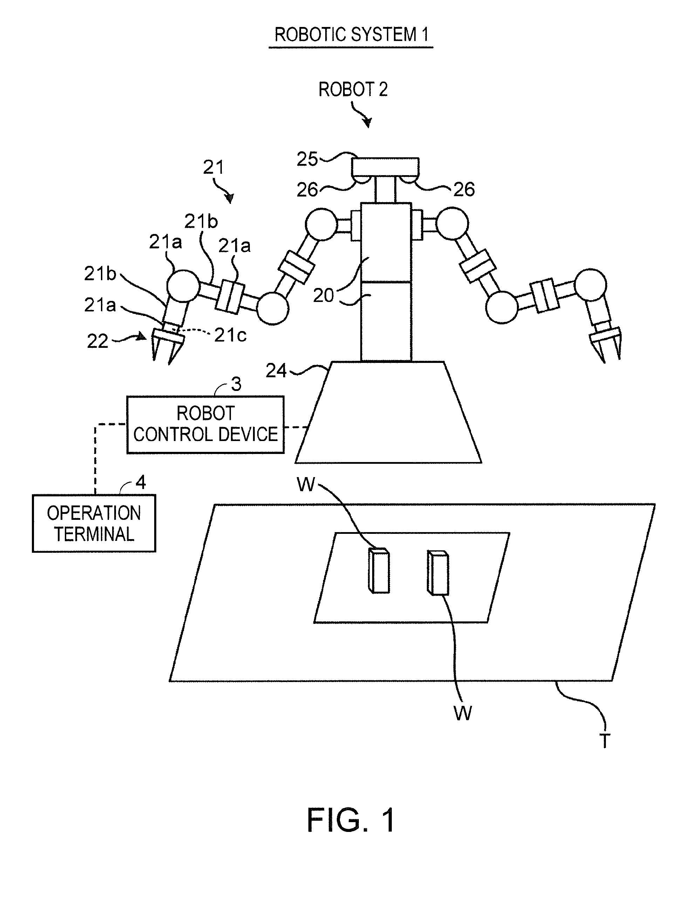

Fig. 1 is a diagram showing an example of a schematic configuration of a robotic system according to the embodiment of the invention.

The robotic system 1 includes a robot 2 and a robot control device 3. The robot 2 and the robot control device 3 are connected to each other so as to be able to communicate with each other. Further, to the robot control device 3, there is connected an operation terminal 4 so as to be able to communicate with the robot control device 3.

The robot 2 performs a work in accordance with an instruction from the robot control device 3. The robot 2 is disposed adjacent to, for example, a workbench T, and works in a predetermined work area on the workbench T. Although the content of the work is not particularly limited, there can be cited, for example, work of gripping an object (hereinafter also referred to as a "work") W, work of moving the work W thus gripped, work of combining a plurality of works W.

The robot 2 includes a body section 20, arms 21, hands 22, a leg section 24, and a head section 25. The head section 25 is provided with two imaging devices 26. It should be noted that the hand 22 corresponds to a gripping section according to the invention.

The arm 21 is provided to the body section 20. The arm 21 includes at least one joints (also referred to as "rotary shafts") 21a and at least one arm members (also referred to as "links") 21b.

The joints 21a are each provided with an actuator (not shown) for making the joint 21a act. The actuator is provided with, for example, a servomotor and an encoder. An encoder value output by the encoder is used for feedback control of the robot 2 and so on.

Further, at the tip of the arm 21, there is disposed a kinesthetic sensor 21c (not shown). The kinesthetic sensor 21c is a sensor for detecting a force or a moment received as a reactive force against the force output by the robot 2. As the kinesthetic sensor 21c, there can be used, for example, a six-axis kinesthetic sensor capable of simultaneously detecting six components, namely force components in three translational-axis directions, and moment components around the three rotational axes. It should be noted that the kinesthetic sensor is not limited to the six-axis sensor, but can also be, for example, a three-axis sensor.

By making the rotary shafts coordinate with each other, it is possible to change the attitude of the arm member 21b to thereby move an attention position (also referred to as an "end point"), which is set in the tip portion of the arm 21, at will within a predetermined movable range, or point the attention position at an arbitrary direction. It should be noted that the position of the end point is not limited to the tip portion of the arm, but can also be set in, for example, the tip portion of the hand 22.

It should be noted that the arm 21 can be said to be a kind of manipulator. The manipulator is a mechanism for moving the position of the end point, and is not limited to the arm, but can take a variety of configurations. Further, the number of the manipulators is not limited to two as shown in the drawing, but it is possible to dispose one manipulator, or three or more manipulators.

The hand 22 is disposed at the tip of the arm 21. The hand 22 is provided with, for example, a plurality of fingers, and is capable of gripping the work with at least two fingers and releasing the work. Hereinafter, it is assumed that the hand 22 is provided with four fingers. The hand 22 can also be detachably attached to the tip portion of the arm 21. It should be noted that each of the fingers is provided with an actuator (not shown) for making the finger act. The actuator is provided with, for example, a servomotor and an encoder.

It should be noted that the hand 22 can be said to be a kind of end effector. The end effector is a member for gripping, lifting, raising, or adsorbing the work, or processing the work. The end effector can take a variety of configurations such as a hand, a hook, and a suction disk. Further, it is also possible to dispose a plurality of end effectors to each of the arms.

The imaging devices 26 are disposed to the head section 25 so as to be able to take an image of the work area on the workbench T, the arm 21, the hand 22, and so on. The imaging devices 26 each output taken image data to a control section (not shown) in the robot 2 and the robot control device 3. The imaging devices 26 are each a camera having, for example, a CCD (charge coupled device) or a CMOS (complementary metal oxide semiconductor). In the present embodiment, it is possible to take a stereo image using the two imaging devices 26 to achieve a three-dimensional stereoscopic view, object recognition, and so on using image processing.

It is obvious that the configuration of the robot 2 is not limited to the example shown in the drawings. For example, although the example having seven joints (seven axes) is shown in Fig. 1, it is also possible to increase or decrease the number of the joints (also referred to as the "axis number") or the number of links. Further, it is also possible to arbitrarily change the shape, the size, the arrangement, the structure, and so on of each of a variety of members such as the joint, the link, and the hand.

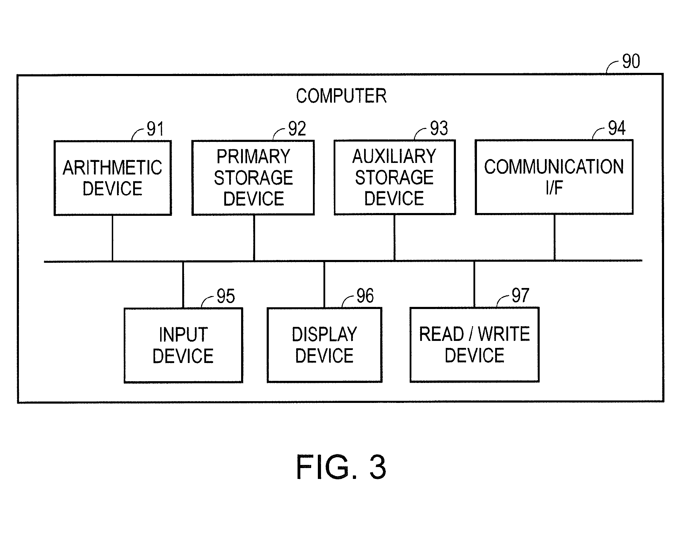

The robot control device 3 receives an operation input related to an action of the robot 2 from the user. For example, the robot control device 3 outputs a model image or the like of the robot 2 to the operation terminal 4 or a display device 96 (see Fig. 3) to display the model image or the like of the robot 2. Further, for example, the robot control device 3 receives an operation to the model image or the like of the robot 2 from the user via the operation terminal 4 or an input device 95 (see Fig. 3). Further, for example, the robot control device 3 generates teaching information showing an action of the robot 2 based on the operation to the model image thus received.

Further, based on the teaching information, the robot control device 3 generates a control command for making the robot 2 act using position control, visual servo control, and so on based on a trajectory planning, and then outputs the control command thus generated to the robot 2. The robot 2 acts by driving actuators in accordance with the control command output from the robot control device 3. Further, the robot control device 3 controls the imaging devices 26 to perform imaging to thereby obtain the taken images.

The operation terminal 4 is controlled by the robot control device 3, and functions as a user interface for performing input of an operation from the user, output of information to the user, and so on. In the present embodiment, the operation terminal 4 is provided with a touch screen, a communication interface, and so on. The touch screen is provided with, for example, a capacitance touch panel, a display, and so on. The operation terminal 4 generates, for example, an operation signal representing an operation of the user on the touch screen, and then transmits the operation signal to the robot control device 3 via a communication interface. Further, the operation terminal 4 receives screen information from, for example, the robot control device 3 via the communication interface, and then displays the screen corresponding to the screen information on the touch screen.

The configuration of the robotic system 1 described above is explained with respect to the principal constituents for explaining the features of the present embodiment, but is not limited to the configuration example described above. Further, configurations provided to typical robotic systems are not excluded.

For example, the imaging devices 26 can also be disposed to a tip portion of the arm 21, the body section 20, or the like of the robot 2. Further, for example, the imaging devices 26 can also be installed to the ceiling, the wall, or the like. Further, for example, it is also possible to arrange that other imaging devices in addition to the imaging devices 26. Further, for example, the imaging devices 26 can also be connected to the robot control device 3. Further, for example, the robot control device 3 can also be incorporated in the robot 2 as a control section. Further, it is also possible that, for example, the function related to the teaching of the robot control device 3 can be installed as a teaching device separated from the robot control device 3, and the teaching or the control command is transmitted from the teaching device to the robot control device 3 or the control section of the robot 2.

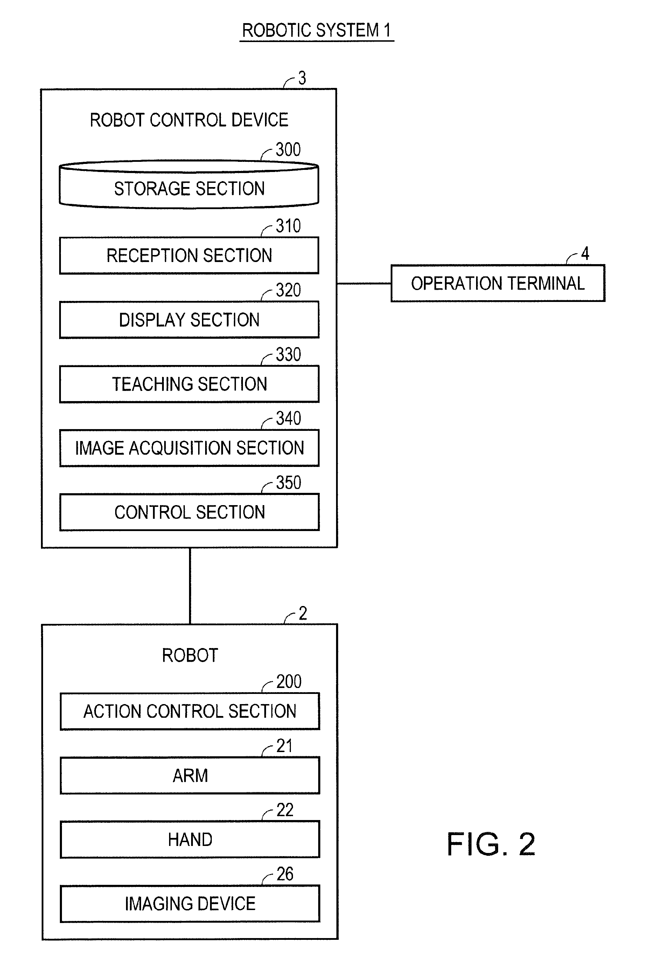

Fig. 2 is a diagram showing an example of a functional configuration of the robotic system.

The robot 2 is provided with an action control section 200, and so on. The robot control device 3 is provided with a storage section 300, a reception section 310, a display section 320, a teaching section 330, an image acquisition section 340, a control section 350, and so on.

The action control section 200 drives the actuators of the respective joints 21a based on, for example, the control command including a move command value output from the robot control device 3 and encoder values of the actuators of the respective joints 21a so that the current position of the end point coincides with a target position represented by the move command value. It should be noted that the current position of the end point can be obtained from, for example, the encoder values in the actuators of the respective joints 21a.

Further, the action control section 200 closes or opens the fingers as much as a designated movement in accordance with the control command to the fingers of the hand 22 output from the robot control device 3, for example. Further, in accordance with the control command for rotating a predetermined joint output from the robot control device 3, for example, the action control section 200 rotates the predetermined joint as much as a designated rotational amount.

Further, in accordance with an instruction from the robot control device 3, for example, the action control section 200 controls the imaging devices 26 to perform imaging, obtains the taken image, and outputs the taken image to the robot control device 3.

As a model image storage section, the storage section 300 stores the model images of the work W, the robot 2, and so on. The model images are each, for example, a three-dimensional CG (computer graphics). The model images of the works W can be prepared so as to correspond respectively to the works W so as to be able to deal with a plurality of work contents different from each other of the robot 2. Further, the model image of the robot 2 can also be prepared for each of the parts (e.g., the joints 21a, the arm members 21b, the hands 22, the fingers of each of the hands 22, the head section 25, the body section 20, and the leg section 24) . It should be noted that it is sufficient for the three-dimensional CG to be what is obtained by deforming corresponding one of the parts of the robot 2 and the works W as the real things.

The reception section 310 receives the operation of the user via the operation terminal 4 or the input device 95 (see Fig. 3). The reception section 310 receives the operation signal representing the operation on the screen of the operation terminal 4 or the display device 96 (see Fig. 3) from the operation terminal 4 or the input device 95, for example. The reception section 310 will be explained later in detail. It should be noted that the explanation will hereinafter be presented with a focus on the case of using the touch screen of the operation terminal 4 as an input device.

The display section 320 displays information to the user via the operation terminal 4 or the display device 96 (see Fig. 3). The display section 320 outputs, for example, the model image of the robot 2 to the operation terminal 4 or the display device 96 to display the model image. Further, the display section 320 generates the screen information corresponding to the operation signal received by the reception section 310, and then makes the operation terminal 4 or the display device 96 display the screen information, for example. The display section 320 will be explained later in detail. It should be noted that the explanation will hereinafter be presented with a focus on the case of using the operation terminal 4 as a display device.

The teaching section 330 generates the teaching information representing the action of the robot 2 based on the operation signal received by the reception section 310. The teaching information includes, for example, an instruction (including the target position and so on) of moving the hand 22, an instruction (including the movement, the moving direction (opening or closing), and so on of the fingers) of opening or closing the hand 22, and an instruction (including the rotation amount, the rotational direction, and so on of the joint) of rotating the hand 22. The teaching section 330 will be explained later in detail.

The image acquisition section 340 transmits an imaging instruction to the robot 2, and then obtains the taken images taken by the imaging devices 26. Further, the image acquisition section 340 recognizes the positions and the directions of the work W and so on from the taken images. For example, the image acquisition section 340 extracts a shape matching the model image of the work W stored in the storage section 300 from the taken images using pattern matching or the like. Since a typical technology can be adopted as the object recognition, the detailed explanation thereof will be omitted.

Based on the teaching information generated by the teaching section 330, the control section 350 generates a control command for making the robot 2 act using the position control, the visual servo control, and so on based on the trajectory planning, and then outputs the control command thus generated to the robot 2.

For example, in the case in which the instruction of moving the hand 22 is included in the teaching information, the control section 350 performs the trajectory planning based on the current position of the end point obtained from the robot 2 and the target position included in the teaching information. Then, the control section 350 generates the move command value for subsequently moving the end point of the robot 2 based on the trajectory thus planned, and then outputs the move command value to the robot 2.

It should be noted that in the robot 2 having the joints, when determining the angles of the respective joints, the position of the end point is uniquely determined by a forward kinematics process. In other words, since it results that in the N-joint robot, one position can be expressed by N joint angles, assuming a set of the N joint angles as one target joint angle, the trajectory of the end point can be thought to be a set of the target joint angles. Therefore, the move command value can be a value related to a position (a target position), or can also be a value related to angles of the joints (target angles).

Further, the control section 350 opens and closes the hand 22, and rotates the hand 22 based on the teaching information generated by the teaching section 330.

For example, in the case in which the instruction of opening or closing the hand 22 is included in the teaching information, the control section 350 generates the move command values of the respective fingers based on the movement and the moving direction of the fingers included in the teaching information, and then outputs the move command values to the robot 2. Further, for example, in the case in which the instruction of rotating the hand 22 is included in the teaching information, the control section 350 generates the move command value of a predetermined joint closest to the hand 22 based on the movement and the moving direction of the joint included in the teaching information, and then outputs the move command value to the robot 2.

Fig. 3 is a diagram showing an example of a hardware configuration realizing a function of the robot control device.

The robot control device 3 can be realized using, for example, such a computer 90 as shown in Fig. 3 provided with an arithmetic device 91 such as a CPU (central processing unit), a primary storage device 92 such as a RAM (random access memory), an auxiliary storage device 93 such as an HDD (hard disk drive), a communication I/F (interface) 94 for achieving connection to a communication network with wire or wirelessly, an input device 95 such as a mouse, a keyboard, a touch sensor, or a touch panel, a display device 96 such as a liquid crystal display, and a read/write device 97 for performing reading and writing of information to a portable storage medium such as a DVD (digital versatile disk).

The reception section 310, the display section 320, the teaching section 330, the image acquisition section 340, a control section 350, and so on are realized by the arithmetic device 91 executing a predetermined program loaded on the primary storage device 92 from, for example, the auxiliary storage device 93. The storage section 300 can be realized by the arithmetic device 91 making use of the primary storage device 92 or the auxiliary storage device 93. The communication with the robot 2 can be realized by, for example, the arithmetic device 91 making use of the communication I/F 94. It should be noted that the predetermined program described above can be installed from the storage medium read by the read/write device 97, or can be installed from the network via the communication I/F, for example.

It should be noted that the operation terminal 4 can also be realized by the computer 90 shown in Fig. 3. Further, the action control section 200 can be realized by, for example, a controller board provided with an arithmetic device, a storage device, a processing circuit, a drive circuit, and so on.

The functional configuration of the robotic system 1 described above is obtained by dividing the configuration of the robotic system 1 into categories corresponding respectively to principal processing contents in order to make the configuration of the robotic system 1 easy to understand. The invention is not at all limited by the way of the categorization or the names of the categories. The configuration of the robotic system 1 can further be divided into a larger number of constituents in accordance with the processing contents. Further, it is also possible to perform the categorization so that each of the constituents performs a larger number of processes. Further, the processing of each of the constituents can be performed by a single hardware device, or can be performed by a plurality of hardware devices.

Further, the functions and the assignation of the processes of the robotic system 1 are not limited to the example explained above. For example, at least a part of the function of the robot control device 3 can be included in the robot 2, and can be realized by the robot 2. Further, for example, at least a part of the function of the robot 2 can be included in the robot control device 3, and can be realized by the robot control device 3.

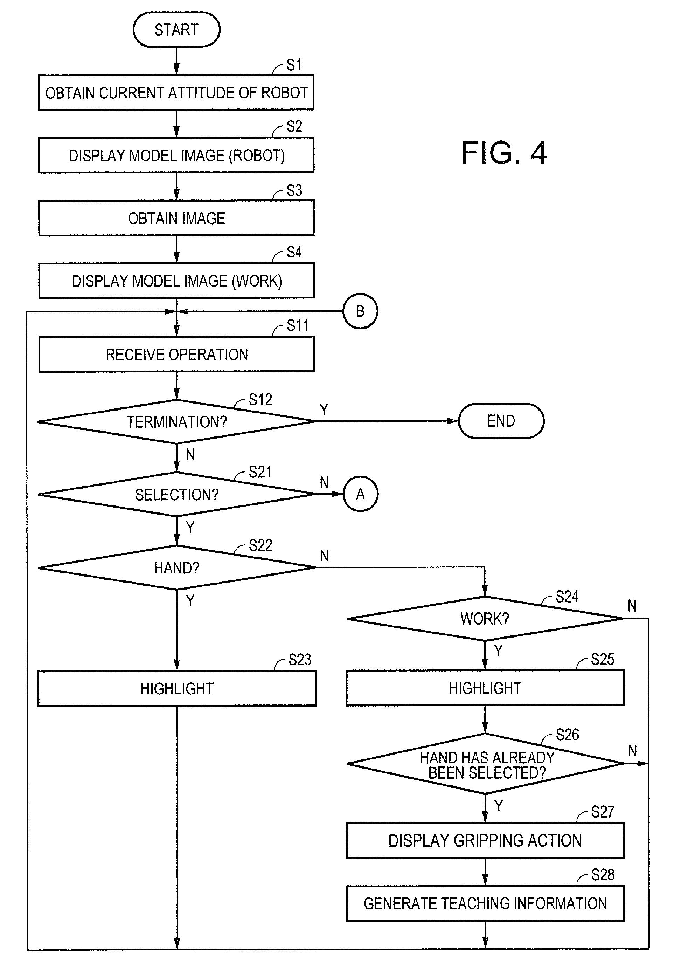

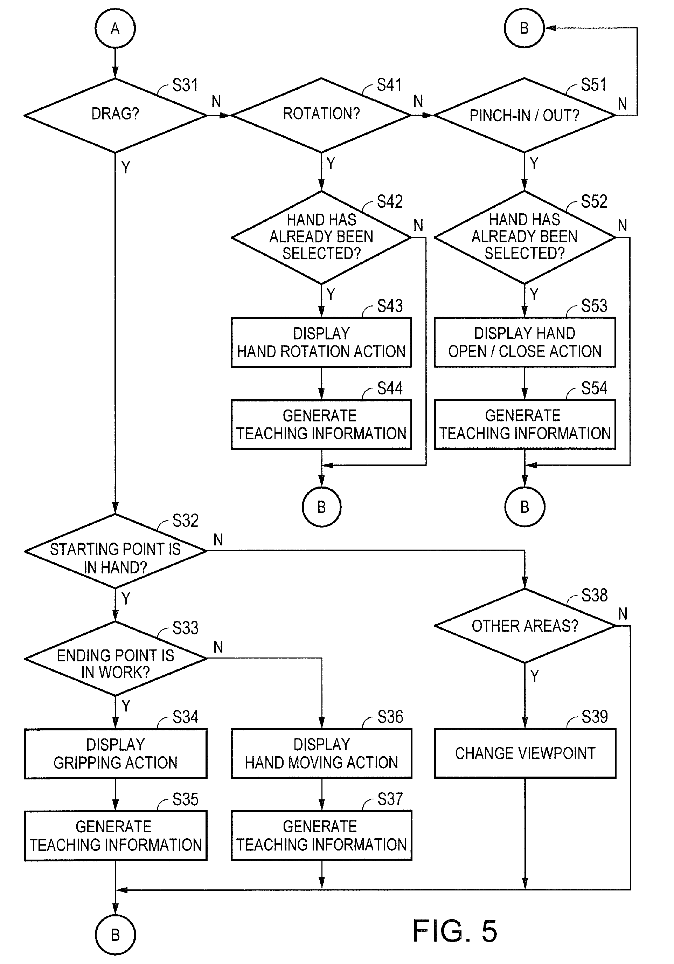

Fig. 4 is a flowchart (part 1) showing an example of the teaching process. Fig. 5 is a flowchart (part 2) showing the example of the teaching process. The flow shown in Fig. 4 is started in the case in which, for example, the reception section 310 receives a starting instruction of the teaching from the user via the operation terminal 4.

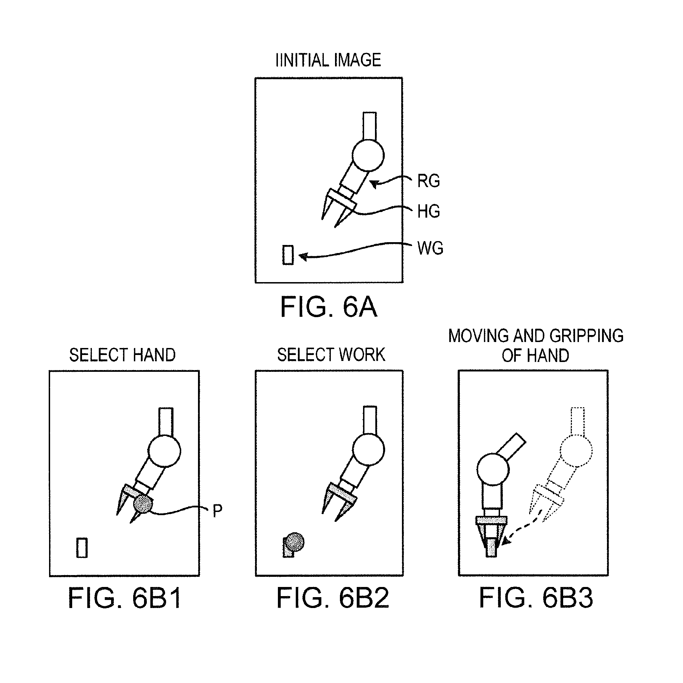

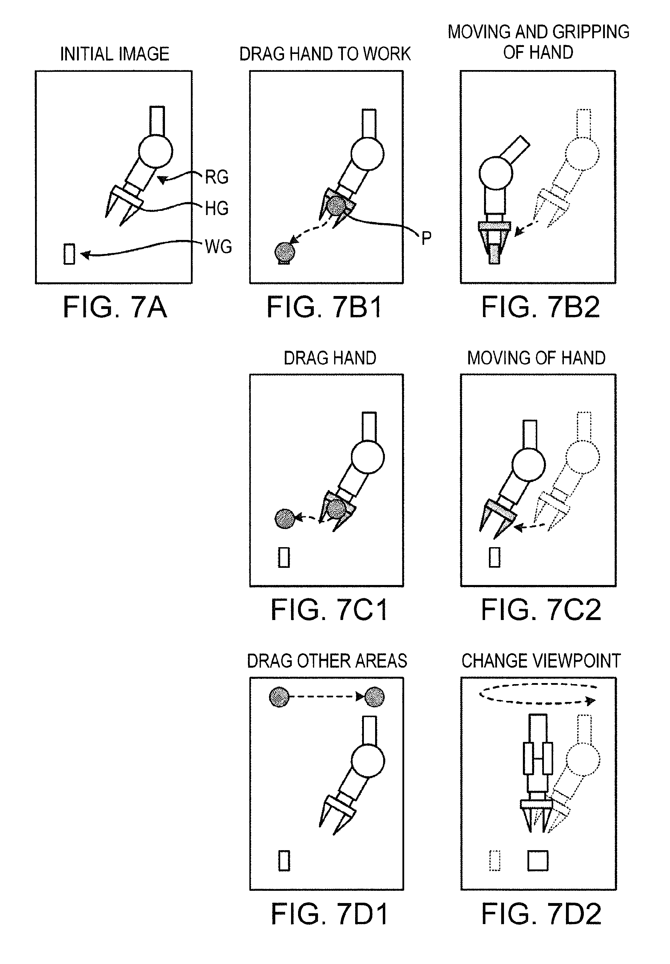

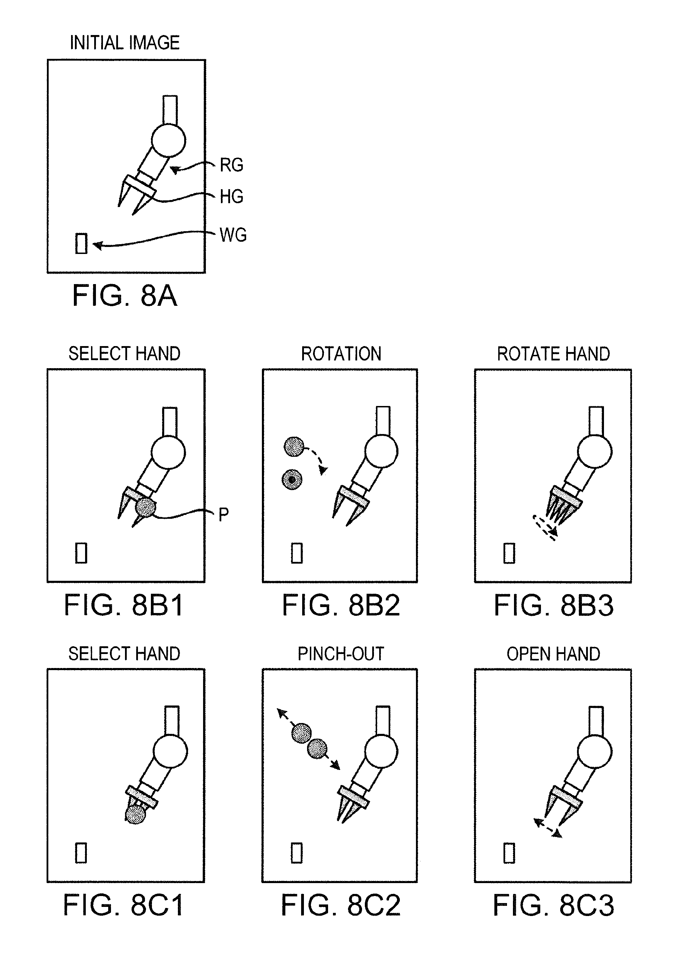

The explanation will be presented arbitrarily with reference to Figs. 6A, 6B1, 6B2, and 6B3 (diagrams (part 1) showing an example of operations and display on the touch panel), Figs. 7A, 7B1, 7B2, 7C1, 7C2, 7D1, and 7D2 (diagrams (part 2) showing the example of the operations and the display on the touch panel), and Figs. 8A, 8B1, 8B2, 8B3, 8C1, 8C2, and 8C3 (diagrams (part 3) showing the example of the operations and the display on the touch panel).

Firstly, the control section 350 obtains (step S1) the current attitude of the robot. Specifically, the control section 350 obtains information representing the current attitude of each of the parts (e.g., the joints 21a, the arm members 21b, the hands 22, the fingers of each of the hands 22, the head section 25, the body section 20, and the leg section 24) from the robot 2. The information representing the current attitude is arranged to be, for example, the position and the direction (which can be expressed by the values of x, y, z, u, v, w, and so on) of each of the parts. It should be noted that it is assumed that the robot 2 stores the positions and the directions of the parts of the robot 2 itself part by part.

Then, the display section 320 displays (step S2) the model image of the robot 2. Specifically, the display section 320 arranges the model images of the respective parts stored in the storage section 300 based on the information representing the position and the direction of each of the parts obtained in the step S1 to thereby generate a three-dimensional model image of the robot 2. Further, the display section 320 generates a three-dimensional model image obtained by viewing the three-dimensional model image of the robot 2 thus generated from the position and the direction (which can be expressed by the values of x, y, z, u, v, w, and so on) of the set viewpoint of the user at a predetermined view angle. Then, the display section 320 converts the three-dimensional model image of the robot 2 thus generated into a two-dimensional model image, and then displays the two-dimensional model image on the operation terminal 4.

Then, the image acquisition section 340 obtains (step S3) the images. Specifically, the image acquisition section 340 transmits an imaging instruction to the robot 2, and then obtains the taken images taken by the imaging devices 26. Further, the image acquisition section 340 recognizes the work W from the taken images, which has been obtained, by pattern matching or the like using the model image of the work W stored in the storage section 300. On this occasion, the image acquisition section 340 identifies the position and the direction (which can be expressed by the values of x, y, z, u, v, w, and so on) of the work W thus recognized.

Then, the display section 320 displays (step S4) the model image of the work W. Specifically, the display section 320 arranges the three-dimensional model image of the work W thus recognized in the step S3 and stored in the storage section 300 based on the position and the direction of the work W, and then generates the three-dimensional model image appearing when viewing the three-dimensional model image of the work W from the position and the direction of the set viewpoint of the user at a predetermined view angle. Then, the display section 320 converts the three-dimensional model image of the work W thus generated into a two-dimensional model image, and then displays the two-dimensional model image on the operation terminal 4 together with the two-dimensional model image of the robot 2 displayed in the step S2. It should be noted that in the case in which the work W has not been recognized in the step S3, it is possible to skip the process in the step S4.

In this manner, as shown in, for example, Figs. 6A, 7A, and 8A, the model image RG (including the model image of the arm 21, the model image HG of the hand 22, and so on) of the robot 2 and the model image WG of the work W are displayed as an initial image. It should be noted that although in Figs. 6A, 6B1, 6B2, 6B3, 7A, 7B1, 7B2, 7C1, 7C2, 7D1, 7D2, 8A, 8B1, 8B2, 8B3, 8C1, 8C2, and 8C3, the partial model image of the work W, the hand 22, and the arm 21 is displayed in order to make the explanation easy to understand, it is also possible to arrange that the display section 320 displays the model image of the whole of the robot 2.

Then, the reception section 310 receives (step S11) the operation of the user. Specifically, the reception section 310 receives the operation signal representing the operation of the user on the screen on which the model image of the robot 2 and so on are displayed in the step S4 via the operation terminal 4. The reception section 310 receives operation types such as tap, drag, rotation, pinch-in, and pinch-out, and operation parameters such as a tap position, a touch position, a starting point position and an ending point position of a drag operation, a rotational direction and a rotational amount of a rotation operation, and a movement of a pinch-in or pinch-out operation. The reception section 310 identifies the operation content of the user based on the content of the screen presently displayed by the display section 320 and the operation signal.

It should be noted that the drag operation is an operation of continuously moving the contact on the screen with, for example, a finger from the starting position to the ending position. The rotation operation is an operation of moving the contact position on the screen with, for example, a finger so as to draw a circular arc. It is also possible to make one finger have contact (a first contact position) with the screen as the center of the circular arc, and move a contact position (a second contact position) so as to draw the circular arc with another finger or the like. The direction in which the circular arc is drawn corresponds to the rotational direction, and the rotational angle of the circular arc corresponds to the rotational amount. Further, the pinch-in operation is an operation of making, for example, two fingers have contact (the first contact position and the second contact position) with the surface of the screen, and then making the contact positions of these fingers come closer to each other. Further, the pinch-out operation is an operation of making, for example, two fingers have contact (the first contact position and the second contact position) with the surface of the screen, and then making the contact positions of these fingers get away from each other. The variation in distance between the first contact position and the second contact position corresponds to the movement.

When receiving the operation of the user in the step S11, the reception section 310 determines (step S12) whether or not the operation thus received is a termination instruction (e.g., tap of an "END" button on the screen) of teaching. If the operation is the termination instruction of teaching (Y in the step S12), the reception section 310 terminates the flow shown in Figs. 4 and 5.

If the operation is not the termination instruction of teaching (N in the step S12), the reception section 310 determines (step S21) whether or not the operation in the step S11 is a selection operation (e.g., the tap on the screen).

If the operation is the selection operation (Y in the step S21), the reception section 310 determines (step S22) whether or not the operation in the step S11 is an operation for selecting the model image HG of the hand 22 on the screen.

If the operation is the selection of the model image HG of the hand 22 (Y in the step S22), the display section 320 highlights (step S23) the model image HG of the hand 22 on the screen, and then returns the process to the step S11. The highlighting can be achieved by, for example, making the color of the model image HG of the hand 22 different from the color of the model images of other parts and the work W.

In this manner, the model image HG of the hand 22 of the robot 2 is selected, and is then highlighted as shown in, for example, Figs. 6B1, 8B1, and 8C1. It should be noted that in Figs. 6A, 6B1, 6B2, 6B3, 7A, 7B1, 7B2, 7C1, 7C2, 7D1, 7D2, 8A, 8B1, 8B2, 8B3, 8C1, 8C2, and 8C3, the tap positions, the touch positions, and so on are shown as the contact position P.

If the operation is not the selection of the model image HG of the hand 22 (N in the step S22), the reception section 310 determines (step S24) whether or not the operation in the step S11 is an operation for selecting the model image WG of the work W on the screen. If the operation is not the selection of the model image WG of the work W (N in the step S24), the reception section 310 returns the process to the step S11.

If the operation is the selection of the model image WG of the work W (Y in the step S24), the display section 320 highlights (step S25) the model image WG of the work W on the screen. The highlighting can be achieved by, for example, making the color of the model image WG of the work W different from the color of the model images of other parts and other works W.

In this manner, the model image WG of the work W is selected, and then highlighted as shown in, for example, Fig. 6B2.

Then, the reception section 310 determines (step S26) whether or not the model image HG of the hand 22 on the screen has already been selected. If the model image HG of the hand 22 has not been selected (N in the step S26), the reception section 310 returns the process to the step S11.

If the model image HG of the hand 22 has already been selected (Y in the step S26), the display section 320 displays (step S27) a gripping action of the hand 22 on the screen. Specifically, the display section 320 obtains the tap position in the case in which the model image WG of the work W is selected from the reception section 310 as the gripping position of the work W with the fingers of the hand 22. Further, the display section 320 obtains the current position of the model image HG of the hand 22 currently displayed on the screen. Further, the display section 320 generates the model images HG of the hand 22 showing an action of moving from the current position to the vicinity (a predetermined position, which is distant from the gripping position as much as a predetermined distance) of the gripping position to grip the work W, and then sequentially displays the model images HG of the hand 22 on the screen.

Further, the teaching section 330 generates (step S28) the teaching information corresponding to the action displayed in the step S27, and then returns the process to the step S11. Specifically, the teaching section 330 obtains a predetermined position, which is distant from the gripping position of the work W with the fingers of the hand 22 as much as a predetermined distance, from the display section 320 as the target position, and then generates the teaching (including the target position) for moving the hand 22. On this occasion, the teaching section 330 converts the two-dimensional target position on the screen into a three-dimensional target position in the robot 2, and includes the three-dimensional target position in the teaching. Further, the teaching section 330 generates the teaching (including the movement and the moving direction of the fingers) for opening or closing the hand 22. On this occasion, the teaching section 330 determines the movement and the moving direction of the fingers based on the shape, the position, the direction, and so on of the work W having been recognized in the step S3, and then includes the movement and the moving direction of the fingers in the teaching. The teaching section 330 stores the teaching thus generated in the storage section 300 as the teaching information. It should be noted that the content of the teaching to be generated is not limited to the example described above. It is also possible to generate, for example, a teaching of moving the hand 22 to a predetermined position, which is distant from the gripping position as much as a predetermined distance, a teaching of opening the hand 22, a teaching of moving the hand 22 from a predetermined position to the gripping position, and a teaching of closing the hand 22.

When performing the operation of selecting the model image HG of the hand 22 and the model image WG of the work W in this manner as shown in, for example, Figs. 6B1 and 6B2, the model images HG showing the action of moving the hand 22 from the current position to the gripping position and then gripping the work W are sequentially displayed as shown in Fig. 6B3. Further, the teaching information corresponding to the display content is generated.

In contrast, if the operation is not the selection operation (N in the step S21), the reception section 310 determines (step S31 in Fig. 5) whether or not the operation in the step S11 is a drag operation.

If the operation is the drag operation (Y in the step S31), the reception section 310 determines (step S32) whether or not the starting point of the drag operation in the step S11 is located on the model image HG of the hand 22 on the screen.

If the starting point of the drag operation is located on the model image HG of the hand 22 (Y in the step S32), the reception section 310 determines (step S33) whether or not the ending point of the drag operation in the step S11 is located on the model image WG of the work W on the screen.

If the ending point of the drag operation is located on the model image WG of the work W (Y in the step S33), the display section 320 displays (step S34) the gripping action of the hand 22 on the screen. Specifically, the display section 320 obtains the ending point position in the case in which the drag operation is performed from the reception section 310 as the gripping position of the work W with the fingers of the hand 22. Further, the display section 320 obtains the current position of the model image HG of the hand 22 currently displayed on the screen. Further, the display section 320 generates the model images HG of the hand 22 showing an action of moving from the current position to the vicinity (a predetermined position, which is distant from the gripping position as much as a predetermined distance) of the gripping position to grip the work W, and then sequentially displays the model images HG of the hand 22 on the screen. It should be noted that it is also possible for the display section 320 to highlight the model image HG at the starting point position of the drag operation and the model image WG at the ending point position thereof.

Further, the teaching section 330 generates (step S35) the teaching information corresponding to the action displayed in the step S34, and then returns the process to the step S11 (Fig. 4). Specifically, the teaching section 330 obtains a predetermined position, which is distant from the gripping position of the work W with the fingers of the hand 22 as much as a predetermined distance, from the display section 320 as the target position, and then generates the teaching (including the target position) for moving the hand 22. On this occasion, the teaching section 330 converts the two-dimensional target position on the screen into a three-dimensional target position in the robot 2, and includes the three-dimensional target position in the teaching. Further, the teaching section 330 generates the teaching (including the movement and the moving direction of the fingers) for opening or closing the hand 22. On this occasion, the teaching section 330 determines the movement and the moving direction of the fingers based on the shape, the position, the direction, and so on of the work W having been recognized in the step S3, and then includes the movement and the moving direction of the fingers in the teaching. The teaching section 330 stores the teaching thus generated in the storage section 300 as the teaching information. It should be noted that the content of the teaching to be generated is not limited to the example described above. It is also possible to generate, for example, a teaching of moving the hand 22 to a predetermined position, which is distant from the gripping position as much as a predetermined distance, a teaching of opening the hand, a teaching of moving the hand from a predetermined position to the gripping position, and a teaching of closing the hand.

When performing the operation of dragging the model image HG of the hand 22 to the model image WG of the work W in this manner as shown in, for example, Fig. 7B1, the model images HG showing the action of moving the hand 22 from the current position to the gripping position and then gripping the work W are sequentially displayed as shown in Fig. 7B2. Further, the teaching information corresponding to the display content is generated.

In contrast, if the ending point of the drag operation is not located on the model image WG of the work W (N in the step S33), the display section 320 displays (step S36) the moving action of the hand 22 on the screen. Specifically, the display section 320 obtains the ending point position in the case in which the drag operation is performed from the reception section 310 as the target position of the movement of the hand 22. Further, the display section 320 obtains the current position of the model image HG of the hand 22 currently displayed on the screen. Further, the display section 320 generates the model images HG of the hand 22 showing the action of moving from the current position to the target position, and then sequentially displays the model images HG on the screen. It should be noted that it is also possible for the display section 320 to highlight the model image HG at the starting point position of the drag operation.

Further, the teaching section 330 generates (step S37) the teaching information corresponding to the action displayed in the step S36, and then returns the process to the step S11 (Fig. 4). Specifically, the teaching section 330 obtains the target position of the movement of the model image HG of the hand 22 from the display section 320, and then generates the teaching (including the target position) for moving the hand 22. On this occasion, the teaching section 330 converts the two-dimensional target position on the screen into a three-dimensional target position in the robot 2, and includes the three-dimensional target position in the teaching. The teaching section 330 stores the teaching thus generated in the storage section 300 as the teaching information.

When performing the operation of dragging the model image HG of the hand 22 to an area other than the model image WG of the work W in this manner as shown in, for example, Fig. 7C1, the model images HG showing the action of moving the hand 22 from the current position to the target position are sequentially displayed as shown in Fig. 7C2. Further, the teaching information corresponding to the display content is generated.

In contrast, if the starting point of the drag operation is not located on the model image HG of the hand 22 (N in the step S32), the reception section 310 determines (step S38) whether or not the starting point of the drag operation is located in an area (other areas) other than the model image WG of the work W on the screen. If the starting point of the drag operation is not located in the other areas (N in the step S38), the reception section 310 returns the process to the step S11 (Fig. 4).

If the starting point of the drag operation is located in the other areas (Y in the step S38), the display section 320 performs (step S39) a viewpoint change, and then returns the process to the step S11 (Fig. 4). Specifically, the display section 320 obtains the starting point position and the ending point position when the drag operation is performed from the reception section 310. Further, the display section 320 obtains the direction and the distance from the starting point position to the ending point position. Further, the display section 320 changes the position and the direction of the viewpoint of the user based on a predetermined table or formula for coordinating the direction and the distance of the drag operation with the change direction and the variation in the position and the direction of the viewpoint of the user. Further, the display section 320 generates the three-dimensional model images of the robot 2 and the work W when viewing the present three-dimensional model images of the robot 2 and the work W at a predetermined view angle from the position and the direction of the viewpoint of the user after the change. Then, the display section 320 converts the three-dimensional model images of the robot 2 and the work W thus generated into two-dimensional model images, and then displays the two-dimensional model images on the operation terminal 4.

When performing the drag operation in the area other than the model image HG of the hand 22 and the model image WG of the work W in this manner as shown in, for example, Fig. 7D1, the viewpoint is changed, and the model images HG and the model image WG are displayed as shown in Fig. 7D2.

In contrast, if the operation is not the drag operation (N in the step S31), the reception section 310 determines (step S41) whether or not the operation in the step S11 is a rotation operation.

If the operation is the rotation operation (Y in the step S41), the reception section 310 determines (step S42) whether or not the model image HG of the hand 22 on the screen has already been selected. If the model image HG of the hand 22 has not been selected (N in the step S42), the reception section 310 returns the process to the step S11 (Fig. 4).

If the model image HG of the hand 22 has already been selected (Y in the step S42), the display section 320 displays (step S43) a rotation action of the hand 22 on the screen. Specifically, the display section 320 obtains the rotational direction and the rotational amount when the rotation operation is performed from the reception section 310. Further, the display section 320 determines the rotational direction and the rotational amount of a predetermined joint closest to the hand 22 based on a predetermined table or formula coordinating the rotational direction and the rotational amount of the rotation operation with the rotational direction and the rotational amount of the joint. Further, the display section 320 generates the model images HG of the hand 22 showing the action of rotating the hand 22 based on the rotational direction and the rotational amount thus determined, and then sequentially displays the model images HG on the screen.

Further, the teaching section 330 generates (step S44) the teaching information corresponding to the action displayed in the step S43, and then returns the process to the step S11 (Fig. 4). Specifically, the teaching section 330 obtains the rotational direction and the rotational amount of the predetermined joint from the display section 320, and then generates the teaching (including the rotational direction and the rotational amount of the joint) for rotating the hand 22. On this occasion, the teaching section 330 converts the rotational amount and the rotational direction of the joint on the screen into the rotational amount and the rotational direction of the joint in the robot 2, and then includes the result in the teaching. The teaching section 330 stores the teaching thus generated in the storage section 300 as the teaching information.

When performing the operation of rotating the hand 22 in this manner as shown in, for example, Fig. 8B2, the model images HG showing the action of rotating the hand 22 are sequentially displayed as shown in Fig. 8B3. Further, the teaching information corresponding to the display content is generated.

In contrast, if the operation is not the rotation operation (N in the step S41), the reception section 310 determines (step S51) whether or not the operation in the step S11 is one of the pinch-in operation and the pinch-out operation. If the operation is not the pinch-in operation or the pinch-out operation (N in the step S51), the reception section 310 returns the process to the step S11 (Fig. 4).

If the operation is one of the pinch-in operation and the pinch-out operation (Y in the step S51), the reception section 310 determines (step S52) whether or not the model image HG of the hand 22 on the screen has already been selected. If the model image HG of the hand 22 has not been selected (N in the step S52), the reception section 310 returns the process to the step S11 (Fig. 4).

If the model image HG of the hand 22 has already been selected (Y in the step S52), the display section 320 displays (step S53) an action of closing or opening the hand 22 on the screen. Specifically, the display section 320 obtains the movement of the pinch-in or the movement of the pinch-out in the case in which one of the pinch-in operation and the pinch-out operation is performed from the reception section 310. Further, the display section 320 determines the moving direction (closing or opening) and the movement of the fingers based on a predetermined table or formula coordinating the movement of the pinch-in or the movement of the pinch-out with the movement in closing the fingers of the hand 22 or the movement in opening the fingers of the hand 22. Further, the display section 320 generates the model images HG of the hand 22 showing the action of closing or opening the hand 22 based on the moving direction and the movement thus determined, and then sequentially displays the model images HG on the screen.

Further, the teaching section 330 generates (step S54) the teaching information corresponding to the action displayed in the step S53, and then returns the process to the step S11 (Fig. 4). Specifically, the teaching section 330 obtains the moving direction and the movement of the fingers from the display section 320, and then generates the teaching (including the moving direction and the movement) for moving the fingers of the hand 22. On this occasion, the teaching section 330 converts the moving direction and the movement of the fingers on the screen into the moving direction and the movement of the fingers in the robot 2, and then includes the result in the teaching. The teaching section 330 stores the teaching thus generated in the storage section 300 as the teaching information.

When performing the pinch-out operation of the hand 22 in this manner as shown in, for example, Fig. 8C2, the model images HG showing the action of opening the fingers of the hand 22 are sequentially displayed as shown in Fig. 8C3. Further, the teaching information corresponding to the display content is generated.

It should be noted that in the case in which the flowchart shown in Figs. 4 and 5 is terminated (Y in the step S12), the control section 350 generates the control command of making the robot 2 act based on the teaching information stored in the storage section 300, and then outputs the control command to the robot 2. Obviously, it is also possible to arrange that in the case of receiving an instruction from the user via the reception section 310, the control section 350 generates the control command and then outputs the control command to the robot 2.

One embodiment of the invention is hereinabove explained. According to the present embodiment, the teaching of a wide variety of actions of the robot can more easily be performed via the input device such as a touch screen.

For example, in the present embodiment, since the images of the robot showing the actions corresponding to a variety of operations of the image are displayed, and at the same time, the teachings corresponding respectively to the actions are performed, the teachings of a wide variety of actions of the robot can more easily be performed. Further, for example, since in the present embodiment, the operation can be performed using the touch operation or the like on the screen on which the image is displayed, the teaching of the action of the robot can more intuitively be performed.

Further, for example, in the present embodiment, when teaching the gripping action, it is possible to more easily teach the gripping action of the robot using a moving operation such as drag without inputting a detailed action of the robot. Further, for example, in the present embodiment, when teaching the gripping action, it is possible to more easily teach the gripping action of the robot using a selection operation such as the tap operation without inputting the detailed action of the robot.

Further, for example, in the present embodiment, when teaching the gripping action, since the contact position of the object on the image is used as the gripping position, it is possible to easily teach the gripping position while performing the moving operation such as drag or the selection operation such as the tap operation. Further, for example, in the present embodiment, since the image of the object is generated based on the taken image, it is possible to easily teach the action to the actual object.

Obviously, the embodiment according to the invention described above intends to exemplify but not limit the sprit and the scope of the invention. For example, it is possible to add the following modifications to the embodiment described above.

For example, although in the embodiment described above, it is arranged that it is possible to teach the action of the hand 22, it is also possible to make it possible to teach the action of the arm member 21b. Further, it is also possible to arrange that it is possible to teach, for example, an action of the body section 20, an action of the head section 25, and an action of the imaging device 26. Further, the same can be applied to end effectors other than the hand 22.

Further, for example, although in the embodiment described above, the recognition of the work W from the taken image and the display of the model image WG are performed before receiving the operation of the user (steps S3, S4 shown in Fig. 4), it is also possible to arrange that the process is performed at an arbitrary timing in response to the operation of the user. Specifically, it is possible to arrange that the same process as in the steps S3, S4 is performed in the case in which the reception section 310 receives the image acquisition instruction (e.g. , tap of an "image acquisition" button on the screen). By adopting this configuration, it is possible to flexibly deal with a change in work content such as addition of the work W to the work area, elimination of the work W from the work area, or a change in attitude of the work W.

Further, it is also possible to arrange that, for example, in the case in which the reception section 310 receives an instruction (e.g., tap of a "camera image" button on the screen) of displaying a camera image, the display section 320 obtains the current taken image using the image acquisition section 340, and then displays the taken image thus obtained on the screen. By adopting this configuration, it is possible for the user to check the status of the work area.

Further, for example, it is possible for the display section 320 to display a message for confirming whether or not the generation of the teaching information is performed and so on on the screen before the generation (e.g. , step S28 shown in Fig. 4, steps S35, S37, S44, and S54 shown in Fig. 5) of the teaching information is started. In this case, the teaching section 330 performs the generation of the teaching information in the case in which the reception section 310 receives the instruction of performing the generation of the teaching information. It should be noted that in the case in which the reception section 310 receives an instruction of not performing the generation of the teaching information, the reception section 310 cancels the operation of the user related to the action of the robot 2 performed last time. The display section 320 may display the model image in the state before the operation is performed on the screen.

Further, for example, although in the above description of the embodiment, the explanation is presented with a focus on the case of using the touch screen of the operation terminal 4 as the input device, it is also possible to use a variety of pointing devices such as a mouse to be connected to the operation terminal 4 as the input device. In this case, the reception section 310 receives the pointing position shown in a pointing image such as a pointer on the screen operated by the pointing device instead of the contact position P on the screen. It should be noted that it is also possible to arrange that the input device 95 of the robot control device 3 is used as the input device, and the display device 96 of the robot control device 3 is used as the display device.

Although the invention is hereinabove explained using the embodiment, the scope of the invention is not limited to the range of the description of the embodiment described above. It is obvious to those skilled in the art that a variety of modifications and improvements can be added to the embodiment described above. Further, it is obvious from the description of the appended claims that the configurations added with such modifications or improvements are also included in the scope of the invention. A variety of configurations can be taken as the configuration of providing the invention. The invention can also be provided as, for example, a robot including the function of the robot control device. Further, for example, the function related to the teaching of the robot control device can be included in the teaching device, and the invention can be provided as a robotic system separately including the teaching device, the robot control device, and the robot. Further, the invention can also be provided as, for example, a robotic system including the teaching device and the robot including the function of the robot control device. Further, the invention can also be provided as a robot control method, a program, a storage medium storing the program, and so on.

## Claims

1. A robot control device (3) comprising:
a display section (320) adapted to display an image (RG) of a robot (2);
a reception section (310) adapted to receive an operation performed to the image (RG) of the robot (2) displayed by the display section (320); and
a teaching section (330) adapted to teach an action of the robot (2),
wherein the display section (320) is adapted to display an image showing one of movement of a gripping section (22) of the robot (2), rotation of the gripping section (22), and opening and closing of the gripping section (22) in accordance with the operation, and
the teaching section (330) is adapted to teach one of the movement of the gripping section (22) of the robot (2), the rotation of the gripping section (22), and the opening and closing of the gripping section (22) to the robot (2) in accordance with the operation.

2. The robot control device (3) according to Claim 1, wherein the reception section (310) is adapted to receive a movement of a contact position on a screen as the operation.

3. The robot control device (3) according to Claim 1 or 2, wherein
in a case in which the reception section (310) receives an operation of moving the contact position from an area on an image of the gripping section (22) to an area on an image (WG) of an object (W),
the display section (320) displays an image showing an action of moving the gripping section (22) to the object (W) and then gripping the object (W), and
the teaching section (330) teaches the action of moving the gripping section (22) to the object (W) and then gripping the object (W) to the robot (2).

4. The robot control device (3) according to any one of Claims 1 to 3, wherein
in a case in which the reception section (310) receives an operation of selecting an image (WG) of an object (W) in a state in which an image of the gripping section (22) is selected,
the display section (320) displays an image showing an action of moving the gripping section (22) to the object (W) and then gripping the object (W), and
the teaching section (330) teaches the action of moving the gripping section (22) to the object (W) and then gripping the object (W) to the robot (2).

5. The robot control device (3) according to Claim 3 or 4, wherein
the reception section (310) receives the contact position on the image (WG) of the object (W) as a gripping position,
the display section (320) displays an image showing an action of moving the gripping section (22) to the gripping position and then gripping the object (W), and
the teaching section (330) teaches the action of moving the gripping section (22) to the gripping position and then gripping the object (W) to the robot (2).

6. The robot control device (3) according to any one of Claims 3 to 5, further comprising an image acquisition section (340) adapted to obtain a taken image obtained by taking an image (WG) of the object (W),
wherein the display section (320) is adapted to generate the image (WG) of the object (W) based on the taken image, and then display the image (WG) of the object (W).

7. The robot control device (3) according to any one of the preceding Claims, wherein
in a case in which the reception section (310) receives an operation of moving the contact position so as to draw a circular arc,
the display section (320) displays an image showing an action of rotating the gripping section (22), and
the teaching section (330) teaches the action of rotating the gripping section (22) to the robot (2).

8. The robot control device (3) according to any one of the preceding Claims, wherein
the contact position includes a first contact position and a second contact position, and
in a case in which the reception section (310) receives an operation of moving the first contact position and the second contact position one of closer to each other and away from each other,
the display section (320) displays an image showing an action of one of closing and opening the gripping section (22), and
the teaching section (330) teaches the action of one of closing and opening the gripping section (22) to the robot (2) .

9. The robot control device (3) according to any one of the preceding Claims, wherein
in a case in which the reception section (310) receives an operation of moving the contact position in a predetermined area on the screen,
the display section (320) changes a viewpoint, and then displays the image of the gripping section (22).

10. The robot control device (3) according to any one of the preceding Claims, wherein the reception section (310) is adapted to receive a movement of a pointing position shown in a pointing image on the screen operated by a pointing device as the operation instead of the movement of the contact position on the screen.

11. A robot (2) comprising a robot control device (3) according to any one of the preceding claims.

12. A robotic system (1) comprising:
a robot (2); and
a robot control device (3) adapted to control the robot (2), the robot control device (3) being configured in accordance with any one of claims 1 to 10.

13. A teaching method of an action of a robot (2), comprising:
displaying an image (RG) of the robot (2);
receiving an operation performed to the image (RG) of the robot (2) displayed in the displaying; and
teaching the action of the robot (2),
wherein in the displaying, an image showing one of movement of a gripping section (22) of the robot (2), rotation of the gripping section (22), and opening and closing of the gripping section (22) is displayed in accordance with the operation, and
in the teaching, one of the movement of the gripping section (22) of the robot (2), the rotation of the gripping section (22), and the opening and closing of the gripping section (22) is taught to the robot (2) in accordance with the operation.

14. The teaching method according to Claim 13, wherein in the receiving, a movement of a contact position on a screen is received as the operation,
and/or
wherein in a case in which an operation of moving the contact position from an area on an image of the gripping section (22) to an area on an image (WG) of an object (W) is received,
an image is displayed showing an action of moving the gripping section (22) to the object (W) and then gripping the object (W), and
the action of moving the gripping section (22) to the object (W) and then gripping the object (W) to the robot (2) is teached.

15. A program of a robot control device (3) comprising:
making the robot control device (3) function as
a display section (320) adapted to display an image (RG) of a robot (2),
a reception section (310) adapted to receive an operation to the image (RG) of the robot (2) displayed by the display section (320), and
a teaching section (330) adapted to teach an action of the robot (2),
wherein the display section (320) displays an image showing one of movement of a gripping section (22) of the robot (2), rotation of the gripping section (22), and opening and closing of the gripping section (22) in accordance with the operation, and
the teaching section (330) teaches one of the movement of the gripping section (22) of the robot (2), the rotation of the gripping section (22), and the opening and closing of the gripping section (22) to the robot (2) in accordance with the operation.
